# EUROPÄISCHE PATENTANMELDUNG

(11) **EP 2 129 047 A1**
(43) Veröffentlichungstag der Anmeldung: **02.12.2009**
(21) Anmeldenummer: 09100218.8
(22) Anmeldetag: 02.04.2009
(51) Int. Cl.: H04L 12/40, B60R 16/023

(54) **Erdungsanordnung für einen Fahrzeugbus**

(30) Priorität: 27.05.2008 DE 102008001988; 10.06.2008 DE 102008002333
(71) Anmelder: Robert Bosch GmbH, 70469 Stuttgart (DE)
(72) Erfinder: Wirth, Jens, 74232, Abstatt (DE); Frese, Volker, 71701, Schwieberdingen (DE)

(57) **Zusammenfassung**

Es wird ein erstes Steuergerät für ein Personenschutzsystem bzw. einer Vorrichtung bzw. ein Verfahren zur Übertragung von Daten zwischen einem ersten und einem zweiten Steuergerät für ein Personenschutzsystem vorgeschlagen. Dabei verbindet nur das erste Steuergerät die Übertragungsleitung mit Masse.

## Beschreibung

### Stand der Technik

Die Erfindung betrifft ein erstes Steuergerät für ein Personenschutzsystem bzw. eine Vorrichtung und ein Verfahren zur Übertragung von Daten nach der Gattung der unabhängigen Patentansprüche.

Aus DE 10 2005 048 548 A1 ist bereits eine Vorrichtung zur Datenübertragung von einer Busstation zur Datenübertragung an ein Steuergerät bekannt.

### Offenbarung der Erfindung

Das erfindungsgemäße Steuergerät für ein Personenschutzsystem bzw. die erfindungsgemäße Vorrichtung bzw. das erfindungsgemäße Verfahren zur Übertragung von Daten mit den Merkmalen der unabhängigen Patentansprüche haben demgegenüber den Vorteil, dass dadurch, dass nur das erste Steuergerät die Übertragungsleitung an Masse anschließt und nicht auch das zweite, die Bildung einer Masseschleife vermieden wird und so eine bessere elektromagnetische Verträglichkeit (EMV) erreicht wird. Insbesondere bei entfernten Steuergeräten in einem Kraftfahrzeug ist die Bildung einer großen Masseschleife kritisch in Bezug auf elektromagnetische Störungen. Dies wird erfindungsgemäß vermieden.

Die Übertragungsleitung ist vorzugsweise zweiadrig und zum Führen elektrischer Signale geeignet. Als elektrische Signale werden beispielsweise Stromimpulse auf einem Ruhestrom verwendet, die Manchestercodiert sind.

Als erstes Steuergerät für ein Personenschutzsystem beispielsweise ein passives und/oder aktives Personenschutzsystem kommt ein Airbag-Steuergerät oder ein sogenanntes Sicherheitssteuergerät in Frage, das die entsprechende Personenschutzmittel, wie Airbags, Gurtstraffer, aber auch Bremsen oder eine Fahrdynamikregelung ansteuert. Das Steuergerät verarbeitet dabei Sensorsignale, die entweder intern oder extern in Bezug auf das Steuergerät erzeugt werden. In Abhängigkeit von der Verarbeitung dieser Sensorsignale steuert das Steuergerät das Personenschutzsystem an. Alternativ sind auch andere Geräte ansteuerbar.

Es ist eine Schnittstelle zum Anschluss an die Übertragungsleitung zu einem zweiten Steuergerät für das Personenschutzsystem vorgesehen. Diese Schnittstellen können zum Beispiel Anschlüsse, Stecker und so weiter sein. Die Schnittstelle kann insbesondere auch softwaremäßig zumindest teilweise realisiert sein.

Das zweite Steuergerät ist beispielsweise ein Sensorsteuergerät oder ein anderes Sicherheitssteuergerät, wie das Steuergerät zur Ansteuerung der Fahrdynamikregelung oder der Bremsen. Das erste bzw. das zweite Steuergerät kann auch ein sogenanntes Sensorsteuergerät sein. Solch ein Sensorsteuergerät beherbergt eine Mehrzahl von Sensoren und stellt diese Sensorwerte roh oder vorverarbeitet anderen Steuergeräten zur weiteren Verarbeitung zur Verfügung. Das erste und zweite Steuergerät können austauschbar die jeweiligen Funktionen übernehmen. Wenn die Kommunikationsleitung eine Masseleitung beinhaltet, dann ist es möglich dass eine Masseschleife ausgebildet wird. Diese Masseschleife würde dann über die Masseleitung der Kommunikationsschnittstelle und über die Masseanschlüsse der jeweiligen Geräte gebildet, und somit das EMV Verhalten bezüglich Ein- und Abstrahlung verschlechtern.

Vorliegend wird beispielhaft von einer Zwei-Leiter-Schnittstelle ausgegangen, die gleichzeitig Versorgungs- und Kommunikationsschnittstelle ist. Die Signalübertragung wird durch eine Strommodulation durchgeführt. Diese Strommodulation kann zu elektromagnetischen Abstrahlungen führen. Deswegen führt man die Leitungen verdrillt aus, so dass sich die Magnetfelder von hinführenden und rückführenden Leiter großteils aufheben. Am besten wirkt diese Maßnahme, wenn die Abschlussimpedanz an beiden Leitern gleich ist. Der in einem Empfänger-IC eingebaute Schalter weist auch im eingeschalteten Zustand eine Impedanz auf. Wenn die zweite Leitung direkt ohne Impedanz an die Masse angeschlossen ist, so wirkt die Verdrillungsmaßnahme schlechter. Daher sollte die erste Maßnahme zur Verbesserung des EMV-Verhaltens sein, die Empfänger-IC-Impedanz durch einen Widerstand in der Masseleitung zum Sensor hin zu simulieren und somit die beiden Abschlussimpedanzen der beiden Leitungen möglichst gleich zu halten.

Die zweite Maßnahme ist die Masseschleife noch weiter aufzubrechen.
Es war bisher möglich, die Stromsenke gegen Masse im Sensorsteuergerät geschaltet. Dadurch hat sich die Masseschleife ausgebildet.
Der erfindungsgemäße Vorschlag ist, ist die Masseschleife folgendermaßen beispielhaft aufzubrechen:
Die Stromwege von Versorgungsstrom und Signalstrom werden aufgetrennt. Der Versorgungsstrom vom Sicherheitssteuergerät zum Sensorsteuergerät geht dann beispielsweise über den Spannungsregler durch die Verbraucher zur Masse des Sensorsteuergerätes. Der Signalstrom des Sensorsteuergerätes wird über eine Stromquelle, die an der Versorgungsleitung angeschlossen ist, auf die zweite Leitung und schließlich im Sicherheitssteuergerät vorzugsweise über einen Widerstand auf die Masse des Sicherheitssteuergerätes geleitet.

Somit fließt der hochfrequente Anteil des Signalstrom vom Sicherheitssteuergrät zum Sensorsteuergerät hin und zurück. Die Rückleitung ist nicht mehr auf Massepotential. Somit gibt es keine Masseschleife mehr.

Weiterhin funktiontiert diese erfindungegemäße Schaltung auch bei Masseversätzen zwischen Sicherheitssteuergerät und Sensorsteuergerät. Das Sicherheitssteuergerät ist beispielsweise ein Airbagsteuergerät oder ein Steuergerät das passive und aktive Personenschutzmittel ansteuert.

Wenn zum Beispiel die Spannung an der Kommunikationsschnittstelle 6V zwischen hin und Rückleitung ist und ein Masseversatz zwischen den beiden Steuergeräten von 1V vorliegt, so liegt vor dem Spannungsregler immer noch eine Spannung von 5V an. Die benötigte Versorgungsspannung der Sensoren 3.3V kann dann vom Spannungsregler bereitgestellt werden.

Eine doppelte Stromspiegelschaltung ist dabei notwendig, um bei Masseversätzen den Stromsignalhub konstant zu halten.

Das digitale Signal von einem Mikrocontroller zum Steuern der Stromsenke ist 0V oder 3.3V gegen Masse. Die Stromsenke erzeugt aus dem diesem Spannungssignal ein Stromsignal gegen Masse. Der Stromspiegel am positiven Pol der Spannungsversorgung transferiert das Stromsignal gegen die Versorgungsleitung, so dass das Stromsignal vom Potenzial der Rückleitung unabhängig ist.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. der in den unabhängigen Patentansprüchen angegebenen Vorrichtung bzw. des in den unabhängigen Patentansprüchen angegebenen Verfahrens möglich.

Es ist vorteilhaft, dass das erste Steuergerät zur Verbindung nach Masse eine Impedanz mit wenigstens einem ohmschen Anteil aufweist. Unter der Verbindung wird eine elektrische Verbindung verstanden, wobei diese hier derart ausgebildet ist, dass eine Impedanz in dieser Verbindung vorgesehen ist, die wenigstens einen ohmschen Anteil aufweist. Das heißt, die Impedanz kann letztlich auch als Konduktanz ausgeführt sein, aber sie muss zumindest einen ohmschen Anteil aufweisen. Dadurch wird erreicht, dass ein Spannungsabstand von der Übertragunsleitung zur Masse realisiert wird. Die Charakterisierung der Impedanz erfolgt bei der Arbeitsfrequenz und nicht bei einem extremen Frequenzgang.

Vorteilhafterweise ist dieser ohmsche Anteil durch einen Schaltungsteil eines Empfänger ICs für die Daten realisiert. Ist der Empfänger-IC, d.h. ein integrierter Schaltkreis vorgesehen, weist dieser meist Anschlüsse auf, die eine entsprechende Impedanz bevorraten, um diese vorliegend zu realisieren. Der Empfänger-IC ist derart konfiguriert, dass er die Daten für die weitere Verarbeitung im Steuergerät aufbereitet, d.h. es wird eine Decodierung durchgeführt, die Nutzdaten werden aus dem Rahmen entnommen und für die weitere Verarbeitung ausgegeben. Die Schnittstelle ist wie beschrieben, durch beispielweise Anschlüsse am Steuergerät realisiert. Anstatt einer integrierten Lösung ist auch eine diskrete Ausführung möglich.

Vorteilhafterweise weist das erste Steuergerät eine Stromquelle für die Übertragung der Daten über die Schnittstelle auf. Diese Stromsenke wird durch eine Sensorik in Abhängigkeit von einem Sensormesswert zur Erzeugung der Daten moduliert. Damit wird mit der Stromquelle auf einen Ruhestrom das Messergebnis aufmoduliert. Dies ist eine robuste und zuverlässige Art und Weise, solche Daten zu übertragen. Alternativ ist ein sogenannter schwimmender Stromspiegel möglich.

Vorteilhafterweise kann die Stromquelle als ein Stromspiegel ausgeführt sein, wobei die Sensorik einen Transistor in Emitterschaltung derart beeinflusst, dass die vom Stromspiegel abgegebenen Daten entsprechend erzeugt werden. Ein Stromspiegel ist eine übliche Art und Weise, eine Stromquelle zu realisieren, wobei der zu erzeugende Strom beispielsweise über den Transistor in Emitterschaltung festgelegt wird. Alternativ kann die Stromquelle auch als Operationsverstärkerschaltung ausgelegt sein. Weiterhin kann der Stromspiegel auch als sogenannter verbesserter Stromspiegel ausgeführt sein, bei dem je nach Aufbau, mit Bipolar- oder MOS-Transistoren, die Basisströme und die sogenannte Early-Spannung kompensiert werden.

Ausführungsbeispiele der Erfindung sind in der Zeichnung dargestellt und werden in der nachfolgenden Beschreibung näher erläutert.

Es zeigen Figur 1 ein Blockschaltbild der erfindungsgegmäßen Vorrichtung mit den erfindungsgemäßen Steuergeräten, Figur 2 eine erfindungsgemäße Schaltung für die Stromquelle und Figur 3 ein Flussdiagramm.

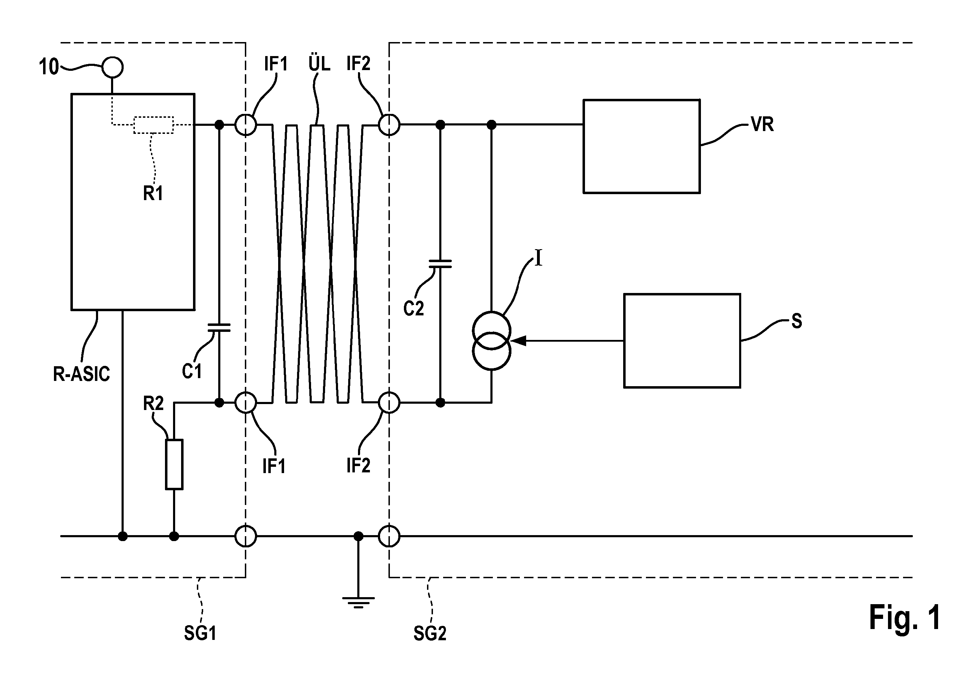

Figur 1 zeigt in einem Blockschaltbild die erfindungsgemäße Vorrichtung. Ein erstes Steuergerät SG1 ist mit einem zweiten Steuergerät SG2 über eine Übertragungsleitung ÜL verbunden. Weiterhin sind die Steuergeräte SG 1 und SG2 an eine Fahrzeugmasse gemeinsam angeschlossen. Die Übertragungsleitung ÜL, die vorliegend verdrillt ist, besteht aus 2 Drähten, die miteinander verdrillt sind und jeweils an die Schnittstellen IF1 des Steuergeräts SG1 und IF2 des Steuergeräts SG2 angeschlossen sind. Bei den Schnittstellen IF1 bzw. IF2 handelt es sich demnach vorliegend um Anschlüsse.

Das Steuergerät SG1 ist beispielsweise ein Airbagsteuergerät und das Steuergerät SG2 beispielsweise ein Sensorsteuergerät. Es sind jedoch noch weitere Varianten möglich, auch ein Tausch der Funktionsweisen zwischen SG1 und SG2 ist möglich. Eine Schnittstelle 1F1 ist vorliegend ein Empfänger-ASIC R-ASIC, ein Kondensator C1 und ein Widerstand R2 angeschlossen. Der Empfänger-ASIC R-ASIC ist an den positiven Anschluss der Übertragungsleitung ÜL angeschlossen. Diesen positiven Anschluss verbindet der Empfänger-ASIC R-ASIC über einen internen Widerstand R1, der zwischen 10 und 20 Ohm liegt, mit der bereitgestellten Spannung von beispielsweise 6,7 Volt, die an der Schnittstelle 10 abgegriffen wird. Der Kondensator C1 erfüllt die Funktion, zu schnelle oder hohe Impulse kurzzuschließen. Über den Widerstand R2, der an den negativen Anschluss der Leitung ÜL an der Schnittstelle IF1 angeschlossen ist, gelingt eine Verbindung der Übertragungsleitung ÜL mit Masse. Durch den Widerstand R2 wird ein Spannungsabstand zur Masse bezüglich der Übertragungsleitung ÜL erreicht. Der Widerstand R2 kann diskret oder integriert, beispielsweise als Teil des Empfänger-ASICs R-ASIC, als Teil einer Diode oder eines Widerstands oder mehrerer solcher Bauelemente realisiert sein.

Am Steuergerät SG2 ist wiederum zwischen den Anschlüssen der Schnittstelle IF2 ein Kondensator C2 zum Kurzschließen zu schneller Impulse vorgesehen. Weiterhin ist eine Schnittstelle IF2, eine Stromquelle I und ein Spannungsregler VR angeschlossen, wobei der Spannungsregler VR die im Steuergerät SG2 benötigten Spannungen bereitstellt. Für den Sensor S stellt er beispielsweise 3,3 Volt bereit. Es ist möglich, dass der Spannungsregler VR aus der Energie, die über die Übertragungsleitung ÜL übertragen wird, die notwendigen Spannungen im Steuergerät SG2 ableitet.

Der Sensor S moduliert die Stromquelle I so, dass ein entsprechendes Signal über die Übertragungsleitung ÜL übertragen wird und vom Empfänger R-ASIC empfangen werden kann und eine entsprechende Decodierung erfolgen kann.

Der Senor S, beispielsweise eine Beschleunigungs-, Drehraten- oder Luftdrucksensorik oder Körperschallsensorik oder beliebige weitere Sensorelemente, ist selbst mit der Fahrzeugmasse verbunden. Entscheidend ist jedoch, dass keine Masseschleife für die Übertragungsleitung ÜL geschaffen wird, um elektromagnetische Einstrahlungen, die zu Störungen der Übertragung führen können, zu vermeiden.

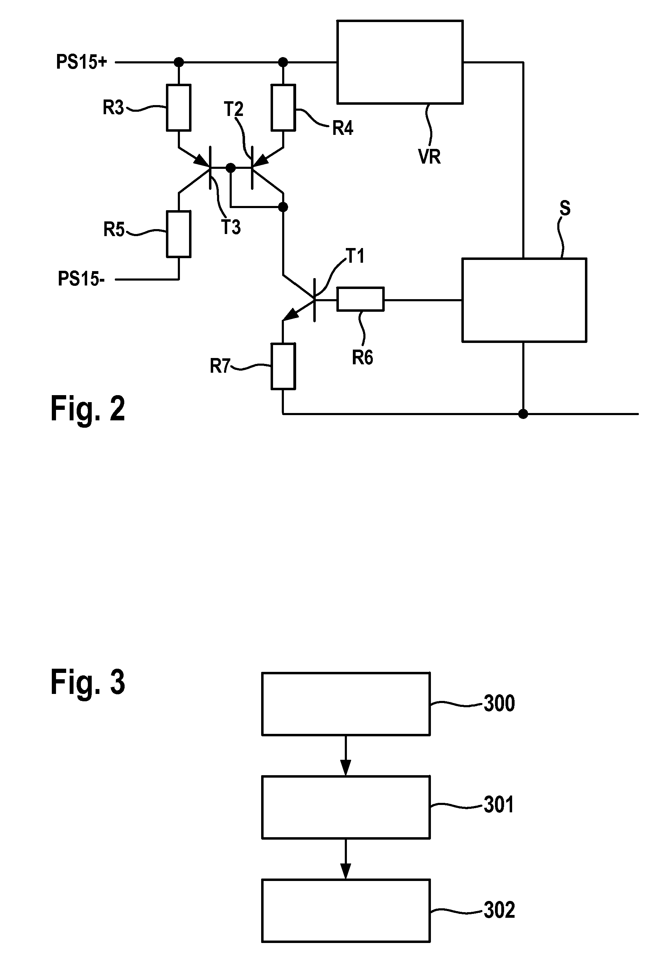

Figur 2 zeigt eine Schaltung im Steuergerät SG2, um die Stromsenke I zu realisieren. Die Stromquelle I ist dabei aus den Transistoren T2 und T3 und den Widerständen R3 bis R5 realisiert, also in einer Stromspiegelschaltung.

Mit einer Stromspiegelschaltung ist es möglich, von einem vorhandenen Strom einen anderen abzuleiten. Der Stromspiegel ist demnach eine stromgesteuerte Stromsenke. Vorliegend handelt es sich um einen einfachen Stromspiegel. Das Stromverhältnis wird dabei über die Emitter-Vielfachheit und/oder Stromquelle oder über das Verhältnis R3 zu R4 eingestellt. Vorliegend wird der Strom durch den Transistor T1 in Emitterschaltung über die Widerstände R6 und R7 eingestellt, wobei von diesem eingestellten Strom dann der Stromspiegel seinen Strom ableitet. Der Stromspiegel ist dabei zwischen dem Transistor T1 und dem Spannungsregler VR geschaltet. Der Sensor S steuert über den Widerstand R6 die Basis des Transistors T1 an und moduliert damit den Strom oder mittels R7 eingestellt wird. Erfindungsgemäß ist der Anschluss der Stromquelle oder genau der Strommesswiderstand zur Plusleitung hin. Dies hilft auch bei einem Masseversatz, wie oben ausgeführt.

Figur 3 zeigt in einem Flussdiagramm das erfindungsgemäße Verfahren. In Verfahrensschritt 300 sendet das Steuergerät 2 die Sensordaten über die Stromquelle wie dargestellt. In Verfahrensschritt 301 empfängt das Steuergerät SG1 über die Übertragungsleitung ÜL die ausgesendeten Daten. Das Steuergerät SG1 decodiert diese Daten und verbindet in Verfahrensschritt 302 die Übertragungsleitung ÜL mit Fahrzeugmasse. Das Steuergerät SG2 wird dies nicht vornehmen. Damit wird die Bildung einer Masseschleife unter Einbeziehung der Übertragungsleitung ÜL vermieden.

## Patentansprüche

1. Erstes Steuergerät (SG1) für ein Personenschutzsystem mit einer Schnittstelle (IF1) zum Anschluss an eine Übertragungsleitung (ÜL) zu einem zweiten Steuergerät (SG2) für das Personenschutzsystem, **dadurch gekennzeichnet, dass** nur das erste Steuergerät (SG1) die Übertragungsleitung (ÜL) mit Masse verbindet.

2. Erstes Steuergerät (SG1) nach Anspruch 1, **dadurch gekennzeichnet, dass** zur Verbindung nach Masse eine Impedanz (R2) mit wenigstens einem ohmschen Anteil vorgesehen ist.

3. Erstes Steuergerät nach Anspruch 2 **dadurch gekennzeichnet, dass** zumindest der ohmsche Anteil durch einen Schaltungsteil eines Empfänger-ICs (R-ASIC) realisiert ist, wobei der Empfänger IC (R-ASIC) an die Schnittstelle (IF1) zum Empfang von Daten von der Übertragungsleitung (ÜL) angeschlossen ist.

4. Erstes Steuergerät nach Anspruch 1 oder 2, **dadurch gekennzeichnet, dass** das erste Steuergerät (SG1) eine Stromquelle (I) für die Übertragung von Daten über die Schnittstelle (IF1) aufweist, wobei eine Sensorik (S) die Stromquelle (I) in Abhängigkeit von einem Sensormesswert, zur Erzeugung der Daten moduliert.

5. Erstes Steuergerät nach Anspruch 4, **dadurch gekennzeichnet, dass** die Stromquelle (I) als ein Stromspiegel ausgeführt ist, wobei die Sensorik (S) einen Transistor (T1) in Emitterschaltung beeinflusst, um die vom Stromspiegel abgegeben Daten zu erzeugen.

6. Vorrichtung zur Übertragung von Daten zwischen einem ersten und einem zweiten Steuergerät (SG1, SG2) für ein Personenschutzsystem nach einem der Ansprüche 1 - 5.

7. Vorrichtung nach Anspruch 6, **dadurch gekennzeichnet, dass** die Übertragungsleitung (ÜL) verdrillt ist.

8. Verfahren zur Übertragung von Daten zwischen einem erst und einem zweiten Steuergerät (SG1, SG2) für ein Personenschutzsystem über eine Übertragungsleitung (ÜL), **dadurch gekennzeichnet, dass** nur das erste Steuergerät (SG1) die Übertragungsleitung (ÜL) mit Masse verbindet.

9. Verfahren nach Anspruch 8, **dadurch gekennzeichnet, dass** die Verbindung nach Masse durch eine Impedanz (R2) mit wenigstens einem ohmschen Anteil vorgenommen wird.

10. Verfahren nach Anspruch 9, **dadurch gekennzeichnet, dass** zumindest der ohmsche Anteil durch einen Schaltungsteil eines Empfänger-ICs (R-RISC) realisiert wird, wobei der Empfänger-IC (R-ASIC) zum Empfang der Daten von der Übertragungsleitung (ÜL) verwendet wird.
